# EUROPÄISCHE PATENTSCHRIFT

(11) **EP 1 283 381 B1**
(45) Veröffentlichungstag und Bekanntmachung des Hinweises auf die Patenterteilung: **23.01.2008**
(21) Anmeldenummer: 02018866.0
(22) Anmeldetag: 05.05.1999
(51) Int. Cl.: F16G 13/16

(54) **Energieführungskette und Kettenglied**
Supporting chain for energy carriers and chain link
Chaîne porteuse pour lignes de transport d'énergie et maillon

(30) Priorität: 05.05.1998 DE 19819845; 28.08.1998 DE 19839270
(43) Veröffentlichungstag der Anmeldung: 12.02.2003
(62) Teilanmeldung aus: 99932627.5
(73) Patentinhaber: igus GmbH, 51147 Köln (DE)
(72) Erfinder: Blase, Günter, 51429 Bergisch Gladbach (DE)
(74) Vertreter: Lippert, Stachow & Partner

(56) Entgegenhaltungen:
- DE-U- 29 821 259
- GB-A- 1 444 307
- PATENT ABSTRACTS OF JAPAN Bd. 015, Nr. 493 (M-1191), 13. Dezember 1991 (1991-12-13) & JP 03 213748 A (TSUBAKIMOTO CHAIN CO;OTHERS: 01), 19. September 1991 (1991-09-19)

## Beschreibung

Die Erfindung betrifft eine Energieführungskette zur Führung von Schläuchen, Kabeln oder dergleichen mit einer Anzahl gelenkig miteinander verbundener Kettenglieder, die durch zueinander parallele Laschen und diese verbindende Querstege gebildet werden, wobei die Energieführungskette so verfahrbar ist, dass diese ein Obertrum, ein Untertrum und einen diese verbindenden Umlenkbereich bildet. Des weiteren betrifft die Erfindung ein Kettenglied zum Aufbau einer Energieführungskette.

Derartige Energieführungsketten weisen bei bestimmten Anwendungszwecken eine beträchtliche Länge auf, die im Bereich von 100 Meter oder darüber liegen kann. Für die Verfahrung der Energieführungskette sind damit entsprechend hohe Antriebsleistungen des Verfahrantriebs notwendig. Dies insbesondere, wenn das Obertrum der Energieführungskette auf dem Untertrum aufliegend verfahren wird, da hierbei eine entsprechende Gleitreibung zu überwinden ist, die bei sehr langen Energieführungsketten beträchtliche Werte annimmt. Aufgrund der Reibung zwischen Obertrum und Untertrum unterliegen die jeweiligen Gleitflächen der Kettenglieder einem erhöhten Verschleiß.

Da beträchtliche Zugkräfte für eine Verfahrung der Energieführungskette notwendig sind, tritt des weiteren eine Längenänderung der Energieführungskette ein, die durchaus bis zu ca.8% bezogen auf die Länge der nicht beanspruchten Kette betragen kann. Diese Längenänderung tritt aufgrund des stets vorhandenen Spiels zwischen den Kettengliedern als auch aufgrund einer stets gegebenen Elastizität der Kettenglieder auf. Diese Verlängerung der Energieführungskette bewirkt eine entsprechende Beanspruchung der von der Energieführungskette geführten Schläuche oder dergleichen.

Aufgabe der vorliegenden Erfindung ist es, eine Energieführungskette bzw. ein Kettenglied zum Aufbau einer Energieführungskette mit erhöhter Stabilität der Kettenglieder zu schaffen, insbesondere bei langen Kettengliedern.

Diese Aufgabe wird erfindungsgemäß dadurch gelöst, dass im Bereich einer Schmalseite einer Kettenlasche voneinander in Längsrichtung der Kette beabstandete Querstege vorgesehen sind. Vorteilhafte Weiterbildungen der Energieführungskette bzw. des Kettengliedes ergeben sich aus den Unteransprüchen.

Vorzugsweise sind im Bereich einer Schmalseite einer Lasche zwei Querstege jeweils unmittelbar benachbart den beiden Gelenkbereichen der Kettenlasche vorgesehen. Die Laschen können so insgesamt durch vier, ggf. aber auch nur durch drei oder zwei Querstege verbunden sein. Besonders vorteilhaft weisen die Querstege seitliche Verbreiterungen auf, die die Innenseite der benachbarten Lasche teilweise überdecken.

Um das Obertrum auf dem Untertrum aufliegend mit möglichst geringem Kraftaufwand und geringem Verschleiß verfahren zu können, können zumindest an einigen Kettengliedern des Obertrums und/oder des Untertrums Gleitrollen vorgesehen sein, die derart angeordnet sind, dass sie auf an den Kettengliedern des gegenüberliegenden Trums vorgesehenen Laufflächen bei einer Bewegung der Energieführungskette abrollbar sind.

Als Gleitrollen im Sinne der Erfindung sollen hierbei Einrichtungen verstanden werden, die bei Anlage an den Laufflächen und einer Relativbewegung zu diesen eine rotatorische Bewegung ausführen. Als Laufflächen können z.B. nach seitlich nach außen vorkragende Bereiche an den Kettenlaschen vorgesehen sein.

Durch diese Maßnahmen ist das Obertrum mittels der Gleitrollen unmittelbar auf dem Untertrum verfahrbar, wodurch aufgrund der erfindungsgemäß vorgesehenen Gleitrollen die Reibung zwischen Obertrum und Untertrum drastisch vermindert ist. So liegt der Reibungswert bei der erfindungsgemäßen Energieführungskette um ca. den Faktor 6 oder mehr unterhalb desjenigen einer herkömmlichen Energieführungskette entsprechender Ausführung, so dass bei gleichem Antrieb die Kettenlänge um den Faktor 6 oder darüber hinaus länger sein kann.

Des weiteren tritt aufgrund der vorgesehenen Gleitrollen auch eine deutlich verringerte Verlängerung gegenüber herkömmlichen Energieführungsketten auf, die mit der gleichen Geschwindigkeit verfahren werden. Auch ist der Verschleiß an den Kontaktflächen zwischen Obertrum und Untertrum deutlich vermindert.

Da die Laufflächen für die Gleitrollen des gegenüberliegenden Trums unmittelbar an den Kettengliedern angeordnet sind, ist eine besonders gewichtssparende Ausführung der Energieführungskette möglich, so dass die Länge der Energieführungskette sowie deren Verfahrgeschwindigkeit entsprechend hohe Werte annehmen können.

Die Gleitrollen können unmittelbar an den Kettenlaschen mittels entsprechender Lager befestigt sein, wodurch die Halterung der Gleitrollen entsprechend stabil ausführbar ist. Separate Verbindungsstücke sind so nicht erforderlich

Um die Laufeigenschaften der Energieführungskette weiterhin zu verbessern, d. h. um Geräuschemissionen noch stärker zu verringern und um die Reibung zwischen Untertrum und Obertrum noch weiter zu reduzieren, ist in vorteilhafter Weiterbildung der Erfindung vorgesehen, dass die Gleitrollen ein Führungsprofil aufweisen, dass durch mehrere umlaufende, im Abstand voneinander in der Lauffläche der Gleitrollen angeordnete Führungsrillen gebildet wird und dass die Tiefe der Führungsrillen wenigstens dem Überstand der Gleitrolle über die Lauffläche der betreffenden Kettenlasche entspricht.

Wenn die Gleitrollen zwei übereinanderlaufender, jeweils mit Rollen bestückter Kettenglieder aufeinandertreffen, versetzen diese sich aufgrund der Geometrie der Führungsrillen in etwa um eine Rillenbreite, so dass die Profile der aufeinandertreffenden Gleitrollen ineinanderkämmen. Die Elastizität der Energieführungskette erlaubt ohne weiteres einen geringfügig versetzten Lauf von Obertrum und Untertrum gegeneinander. Dieser Versatz entspricht etwa der Breite einer Führungsrille. So wird in vorteilhafter Art und Weise die Konvergenz der beiden übereinanderliegenden Trumme beim Aufeinandertreffen von jeweils zwei Gleitrollen verhindert. Dadurch, dass die Gleitrollen nun nicht mehr übereinander auf- und absteigen müssen, wird beträchtlich an ansonsten aufzuwendender Zugkraft auf das Obertrum gespart. Sich aufeinanderzubewegende Gleitrollen können sich auf diese Art und Weise einfach durchdringen.

Zweckmäßigerweise besitzen die Führungsrillen ein etwa trapezförmiges Querschnittsprofil, wodurch die richtige Ausrichtung der Gleitrollen zueinander gewährleistet wird.

In einer anderen bevorzugten Ausführung sind die Gleitrollen in an den Kettenlaschen angeordneten Ausnehmungen angeordnet, wobei die Gleitrollen zumindest geringfügig über die Kettenlaschen in Richtung auf das gegenüberliegende Trum hervorstehen. Die Drehachse der Gleitrollen befindet sich dabei innerhalb des Querschnittes der Kettenlaschen.

Die Laufflächen für die Gleitrollen können unmittelbar durch die dem gegenüberliegenden Trum zugewandten Schmalseiten der Kettenlaschen gebildet werden. Hierbei können die Kettenlaschen derart ausgebildet sein, dass sich bei gestreckter Energieführungskette eine durchgehende Lauffläche ergibt, so dass insbesondere in den Gelenkbereichen der Kettenlaschen keine oder nur minimale Niveaunterschiede der Lauffläche vorliegen.

Die Ausnehmungen zur Aufnahme der Gleitrollen in den Kettenlaschen können dabei in seitlicher Richtung der Kettenlaschen, d.h. quer zur Längsrichtung der Energieführungskette, geschlossen ausgeführt sein. Durch die derart gebildeten Taschen, die nur einseitig geöffnet sind, kann eine Energieführungskette mit vollständig abgeschlossenem Innenraum ausgebildet werden.

Um eine geringe Flächenpressung der Laufflächen zu gewährleisten, ist die Breite der Gleitrollen möglichst groß zu wählen. Gegebenenfalls können hierzu die Kettenlaschen im Bereich der Gleitrollen mit Dickstellenbereichen entsprechender Stärke ausgeführt sein, wobei die Wandungsstärke der Kettenlaschen in Richtung auf die Gelenkbereiche oder in Richtung auf die Mittellängsachse der Kettenlaschen hin abnehmen kann.

An den Kettenlaschen können jeder Schmalseite zugeordnet jeweils eine oder auch zwei oder mehrere Gleitrollen vorgesehen sein, die bezüglich der Längsrichtung der Energieführungskette voneinander beabstandet sind, wodurch die Beanspruchung der Gleitrollen und der Lager jeweils auf mehrere Gleitrollen verteilt werden kann.

Ist vorgesehen an den Querstegen Deckel- bzw. Bodenelemente anzuordnen, so dass ein allseitig geschlossener Kabelkanal resultiert, so weist der Abstand benachbarter Querstege an jeweils einer Schmalseite der Laschen sowie die Laschenlänge vorteilhafterweise eine doppelt so große Teilung auf, wie die nicht mit Rollen versehenen Kettenglieder. Die mit Rollen versehenen Glieder können so mit der doppelten Anzahl von üblichen Deckel-und Bodenelementen der bisher eingesetzten Glieder bestückt werden, um einen geschlossenen Kanal zu bilden, ohne dass Sonderteile notwendig sind.

Nach einer weiteren Ausführungsform kann an jeder Kettenlasche jeweils zumindest eine Gleitrolle vorgesehen sein, die im mittleren Bereich der Kettenlasche angeordnet ist, wobei in Längsrichtung der Energieführungskette jeweils vor und hinter der Gleitrolle, Querstege angeordnet sind.

Um die Laufeigenschaft der Energieführungskette zu verbessern können die Laufflächen Auflaufschrägen aufweisen, die zu den Gleitrollen hin jeweils ansteigen. Hierdurch kann die von den Kettenlaschen vorstehende Höhe der Gleitrollen bei einer gegebenen Anordnung der Drehachse verringert werden, was sich auf die Laufruhe der Energieführungskette vorteilhaft auswirkt.

Zur Befestigung der Gleitrollen in den Ausnehmungen der Kettenlaschen können Flansche vorgesehen sein, die einen Lagerbereich für die Gleitrollen aufweisen, wobei die Flansche bezüglich der Drehachse der Gleitrollen Bereiche größerer radialer Ausdehnung aufweisen können, die mit Mitteln zur Befestigung der Flansche an den Kettenlaschen versehen sind. Die Gleitrollen können dabei einseitig oder beidseitig an den Flanschen gelagert sein, die Drehachse kann auch an einseitig am Flansch und an dem gegenüberliegenden Bereich der Kettenlasche gelagert sein.

Sind die Kettenlaschen mit Ausnehmungen zur Aufnahme der Gleitrollen versehen, so können Mittel vorgesehen sein, mittels derer die Ausnehmungen in Richtung auf das gegenüberliegende Trum überbrückbar sind. Dies kann z.B. durch entsprechende Abdeckkappen erfolgen. Hierdurch kann ein Einlaufen der Gleitrollen eines Trums in Ausnehmungen der Kettenglieder des gegenüberliegenden Trums verhindert werden, wenn in diesen Ausnehmungen keine Gleitrollen angeordnet sind.

Insbesondere können zwischen den mit Gleitrollen versehenen Kettengliedern auch übliche Kettenglieder vorgesehen sein. Die Energieführungskette kann so im wesentlichen aus bisher bekannten Kettengliedern aufgebaut werden, zwischen denen z. B. im Abstand von mehreren Kettengliedern zusätzlich mit Rollen versehene Kettenglieder angeordnet werden.

Die Kettenlaschen können alternativ oder zusätzlich auch so ausgebildet sein, dass diese an einer der parallel zur Längsrichtung der Kette verlaufenden Schmalseite mit Ausnehmungen zur Aufnahme von Gleitrollen versehen sind, wobei die gegenüberliegende Schmalseite der Kettenlasche keine Ausnehmungen aufweist, und wobei die Kettenlaschen so ausgebildet sind, dass sie wahlweise mit einer der Schmalseiten dem gegenüberliegenden Trum zugewandt montiert werden können. Die gleiche Kettenlasche kann so wahlweise bei Montage mit oder ohne Gleitrolle verwendet werden. Hierzu ist die Kettenlasche lediglich um 180° um ihre Längsachse oder um die Achse zu drehen, welche in der Mittelebene der Kettenlaschen sich senkrecht zu deren Längsrichtung erstreckt.

Die mit Laufrollen versehenen Glieder besitzen eine größere Länge, d. h. eine größere Teilung als die herkömmlichen Kettenglieder. Das Überschreiten eines bestimmten Teilungsmaßes ist eigentlich nicht wünschenswert, da hierdurch ein unrunder Lauf der Kette im Umlenkradius erzeugt wird, insbesondere wenn Glieder mit zu stark unterschiedlicher Länge alternierend aufeinanderfolgen. Nach einer Ausführungsform der Erfindung ist deshalb vorgesehen, dass die Gleitrollen seitlich nach außen vorstehend an den Kettenlaschen angeordnet sind und dass als Laufflächen seitlich nach außen vorkragende Verbreiterungen der Kettenlaschen vorgesehen sind. Hierdurch kann bei Kettengliedern mit Gleitrollen die Teilung der Kettenglieder ohne Gleitrollen beibehalten werden.

Zweckmäßigerweise sind bei einer solchen Ausführung der Energieführungskette alle Kettenlaschen eines Strangs, mit einer eine Lauffläche bildenden Verbreiterung versehen, so dass über die Länge der Energieführungskette wenigstens eine im wesentlichen geschlossene Lauffläche entsteht.

Die Gleitrollen können jeweils eine fensterartige Ausnehmung in den Laufflächen bildenden Verbreiterungen durchdringen.

Die Verteilung der Gleitrollen auf die Kettenglieder ist auf unterschiedliche Art und Weise möglich. Es ist nicht in allen Fällen nowendig, jedes der Kettenglieder mit Gleitrollen zu versehen, so dass die Gleitrollen auch im Abstand von mehr als einem Kettenglied an der Energieführungskette angeordnet sein können. Es kann dabei ein regelmäßiger Abstand zwischen den Gleitrollen vorgesehen sein, so dass z.B. nur jedes vierte, nur jedes fünfte oder dergleichen Kettenglied mit gegenüberliegenden Gleitrollen versehen ist.

Die Gleitrollen können jedoch auch ungleichmäßig über die Länge der Energieführungskette verteilt sein. So können größere Identitätsperioden der Gleitrollenverteilung vorgesehen sein, wobei der Abstand der Gleitrollen zueinander z.B. alternieren kann, so dass ausgehend von einem Kettenglied in Kettenlängsrichtung Gleitrollen nach drei, dann nach fünf, dann nach drei usw. Kettengliedern angeordnet sind. Die Verteilung der Gleitrollen über die Kettenglieder kann dabei auch statistisch erfolgen.

Des weiteren ist es nicht notwendig, beide Kettenlaschen desselben Kettengliedes mit Gleitrollen zu versehen, so dass die Verteilung der Gleitrollen auf die verschiedenen Stränge von Kettenlaschen nicht symmetrisch sein muß.

Eine ungleichmäßige bzw. unsymmetrische Verteilung der Gleitrollen hat den Vorteil, dass zu bestimmten Zeitpunkten der Verfahrung der Energieführungskette nicht sämtliche Gleitrollen gleichzeitig miteinander in Berührung kommen, sondern vielmehr jeweils nur einige derselben, wobei die zeitlichen Abstände zwischen den Berührungen der Gleitrollen variieren können. Hierdurch werden die geringen Stoßbewegungen beim Aufeinandertreffen der Gleitrollen ungleichmäßig über die Energieführungskette verteilt, so dass bei einer schnellen Verfahrung derselben sich über die gesamte Energieführungskette erstreckende ruckartige Bewegungen vermieden werden. Die Laufruhe der Energieführungskette kann hierdurch verbessert werden.

Je nach Einsatzbedingung der Energieführungskette können die Kettenlaschen mit Gleitrollen versehen sein, welche bezüglich der Längsachse der Kettenlaschen auf einer Seite, auf der gegenüberliegenden Seite oder auf beiden Seiten der Kettenlaschen hervorstehen. Diese Kettenlaschen können hiermit wahlweise im Bereich des Obertrums oder des Untertrums montiert werden oder, wenn die Energieführungskette um den Abschlußpunkt beidseitig verfahrbar ist, auf beiden Seiten der Kettenlaschen.

Die Anordnung von Gleitrollen ist insbesondere auch bei Energieführungsketten möglich, die mehr als zwei parallele Stränge von Kettenlaschen aufweisen, wobei Gleitrollen an zumindest zwei Strängen vorzusehen sind. Die Gleitrollen können beispielsweise ausschließlich an den außen liegenden Strängen angeordnet sein, sie können alternativ oder zusätzlich auch an einen oder mehreren der innenliegenden Stränge der Kettenlaschen vorgesehen sein.

Besonders vorteilhaft ist es, wenn zumindest an einem sich an den beweglichen Mitnehmer der Energieführungskette anschließenden Bereich der Kette abschnittsweise Kettenglieder untereinander und das zum Mitnehmer nächstliegende dieser Kettenglieder mit dem Mitnehmer zugstabil durch mindestens ein in Längsrichtung der Kette im wesentlichen nicht dehnbares und in Abwinklungsrichtung der Kette biegsames Element verbunden sind.

Durch die Anordnung des nicht dehnbaren Elements an der Energieführungskette ist diese in Kombination mit der Anordnung der Gleitrollen mit geringem Kraftaufwand und ohne Längung der Energieführungskette unter Zugbelastung mit sehr großen Längen verfahrbar. Insgesamt können so Energieführungsketten besonders großer Längen beherrscht werden, wodurch sich neue Anwendungsgebiete für Energieführungsketten ergeben.

Vorteilhafterweise umfassen die Abschnitte, in denen die durch das oder die nicht dehnbaren Elemente verbundene Kettenglieder angeordnet sind, mehrere Kettenglieder. Die Abschnitte können von gleicher oder unterschiedlicher Länge sein. Bevorzugt wer den unterschiedliche Längen verwendet, wobei sich die Abschnitte zum Mitnehmer hin verkleinern, da sich die Zugbeanspruchung der Kette zum Mitnehmer hin erhöht.

Bei dem oder mindestens einem der nicht dehnbaren Elemente kann es sich um eine der in der Kette geführten Leitungen handeln. Bevorzugt ist das oder mindestens eines der Elemente separat zu den Leitungen angeordnet. Das bzw. die separat zu den Leitungen angeordneten Elemente können im Innern der Kette vorgesehen sein und zum Beispiel Stahlseile aufweisen. Es kommt jedoch auch jedes andere diese Eigenschaften aufweisende Element in Betracht.

Die benachbarten der am Ende einzelner Abschnitte angeordneten Kettenglieder sind vorzugsweise unterereinander und das zum Mitnehmer nächstliegende dieser Kettenglieder mit dem Mitnehmer durch jeweils mindestens ein in Längsrichtung der Kette nicht dehnbares und in Abwinklungsrichtung der Kette biegsames Element zugstabil verbunden.

Vorzugsweise werden das oder die nicht dehnbaren Elemente auf separat zu den Querstegen angeordneten Leisten, die mit den gegenüberliegenden Laschen der Kettenglieder verbunden sind, zugstabil befestigt.

Die durch die Kette geführten Leitungen sind vorteilhafterweise mittels Klemmböcken an diesen Leisten befestigt, die außerdem Befestigungsteile für die Enden von Stahlseilen oder anderen entsprechenden Elementen aufweisen können.

Die Leisten können an ihren in Querrichtung der Kette liegenden Enden Zapfen aufweisen, die die Funktion der Gelenkzapfen der betreffenden Kettenglieder übernehmen. Das heißt, dass die Zapfen der Leisten formschlüssig durch zwei zueinaner fluchtende Öffnungen in den Überlappungsbereichen unmittelbar benachbarter Kettenglieder greifen und somit die Schwenkachsen dieser Kettenglieder bilden. Diese Ausbildung erlaubt eine um die Schwenkachsen pendelnde Anordnung der auf den Leisten befestigten Leitungen und separaten nicht dehnbaren Elementen.

Die Leisten können an ihren in Querrichtung der Kette liegenden Enden Vorsprünge aufweisen, die in entsprechend ausgebildeten Nuten an den Innenseiten der Kettenglieder zwischen den Gelenkbereichen eingreifen. Die in allen Kettengliedern einer Kettenserie vorgesehenen Nuten können auch zur Befestigung anderer Teile zwischen den Kettenlaschen dienen.

Die erfindungsgemäßen Energieführungsketten können sowohl durch Innen- und Außenlaschen als auch durch gekröpfte Kettenglieder aufgebaut werden. Die Querstege können jeweils lösbar oder einstückig an den Seitenlaschen befestigt sein oder eine Breite einnehmen, so dass ein geschlossener Kanal entsteht. Die Gelenkverbindungen können auf jede Art und Weise ausgeführt sein und z.B. auch als Filmscharniere o.dgl..

Die Erfindung wird im folgenden im einzelnen beschrieben und anhand der Figuren beispielhaft erläutert. Es zeigen:
Figur 1 eine Außenlasche einer erfindungsgemäßen Energieführungskette in verschiedenen Ansichten,
Figur 2 eine Innenlasche einer erfindungsgemäßen Energieführungskette in verschiedenen Ansichten,
Figur 3 eine zweite Ausführungsform einer Außenlasche,
Figur 4 einen Querschnitt durch eine Kettenlasche auf Höhe einer Gleitrolle,
Figur 5 eine Draufsicht auf einen Ausschnitt einer Energieführungskette,
Figur 6 Seitenansichten auf drei Energieführungsketten mit auf dem Untertrum abgelegtem Obertrum und unterschiedlicher Verteilung von Gleitrollen,
Figuren 7 und 8 vergrößerte Darstellungen einer Energieführungskette nach Figur 6 in unterschiedlichen Verfahrstellungen,
Figur 9 einen Querschnitt einer Energieführungskette mit auf dem Untertrum abgelegtem Obertrum in unterschiedlichen Verfahrstellungen,
Figur 10 eine Seitenansicht einer Energieführungskette mit einem Mitnehmer und Kettenglieder verbindendem nicht dehnbaren Element,
Figur 11 eine Darstellung einer zweiten Ausführungsform der erfindungsgemäßen Energieführungskette mit auf dem Untertrum abgelegten Obertrum, bei welcher die Gleitrollen seitlich nach außen vorstehend an den Kettenlaschen angeordnet sind,
Figur 12 die Darstellung aus Fig. 11, teilweise im Schnitt,
Figuren 13 und 14 jeweils Seitenansichten einer Energieführungskette mit auf dem Untertrum abgelegtem Obertrum gemäß dem zweiten Ausführungsbeispiel der Erfindung,
Figur 15 eine Darstellung einerEnergieführungskette mit auf dem Untertrum abgelegtem Obertrum gemäß einem dritten Ausführungsbeispiel der Erfindung, bei welchem die Gleitrollen profiliert sind,
Figur 16 die Ansicht aus Figur 15, teilweise im Schnitt, und
Figuren 17 und 18 jeweils eine Seitenansicht der Energieführungskette gemäß dem dritten Ausführungsbeispiel der Erfindung, jeweils in einer anderen Verfahrstellung der Energieführungskette.

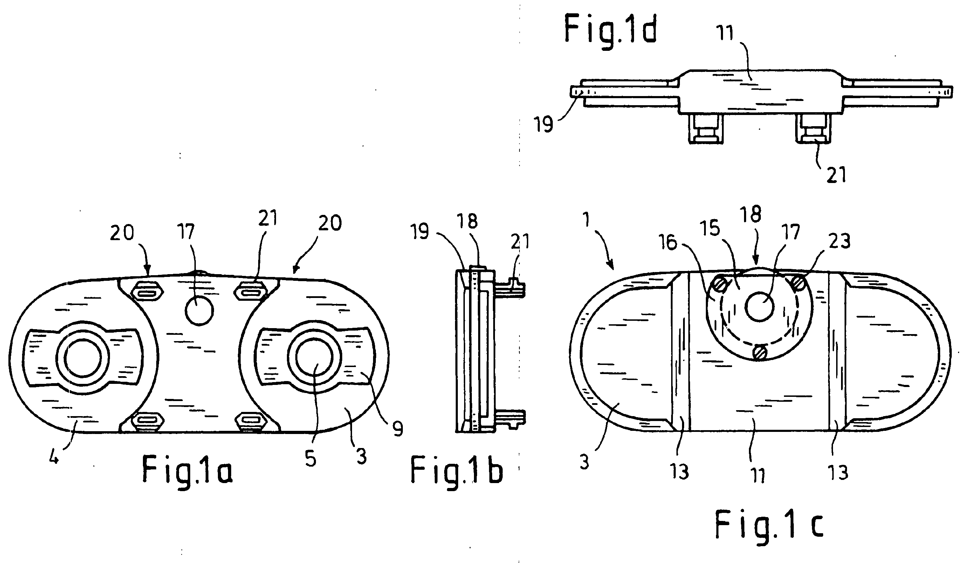

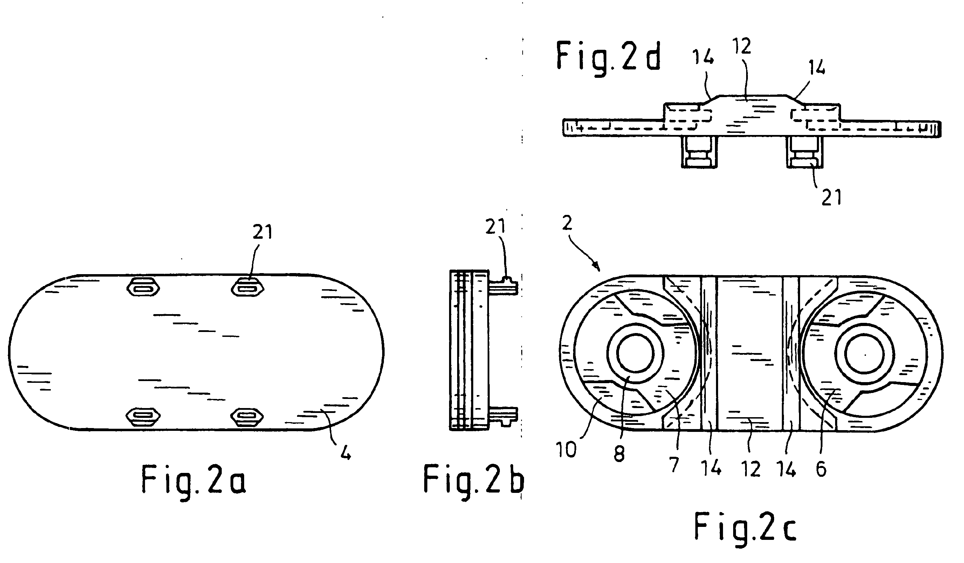

Die in Figur 1 gezeigte Kettenlasche 1 ist als Außenlasche ausgeführt, die mit einer Innenlasche 2 nach Figur 2 zur Bildung eines Stranges gelenkig verbunden wird. Hierzu sind an den Endbereichen 3,4 der Laschen 1 Gelenkzapfen 5 und an den Endbereichen 6,7 der Innenlaschen 2 korrespondierenden Zapfenführungen 8 sowie sowie jeweils korrespondierende Anschlagpaare 9,10 zur Begrenzung der Verschwenkwinkel vorgesehen.

Die Laschen 1,2 sind jeweils symmetrisch zu der senkrecht zur Längsachse der Laschen stehenden Mittelebene.

Die mittleren Bereiche 11,12 der Kettenlaschen 1,2 sind als Dickstellenbereiche ausgeführt und gehen an der dem Ketteninneren abgewandten Seite der Laschen 1,2 über die senkrecht zur Längsache der Laschen verlaufenden Schrägen 13,14 in die Endbereiche 2,3 über.

An dem mittleren Bereich 11 der Außenlasche 1 ist eine Gleitrolle 15 in einer kreissegmentförmigen Ausnehmung 15a mittels eines Flansches 16 drehbar befestigt. Die Drehachse 17 der Gleitrolle ist an einem Ende von dem Flansch 16 und an dem gegenüberliegenden Ende von der Kettenlasche in einer Ausnehmung gehaltert.

Die Gleitrolle 15 kann über den vorstehenden Bereich 18 auf einer an den Kettengliedern des gegenüberliegenden Trums angeordneten Lauffläche abrollen, so dass das Obertrum auf dem Untertrum aufliegend verfahrbar ist.

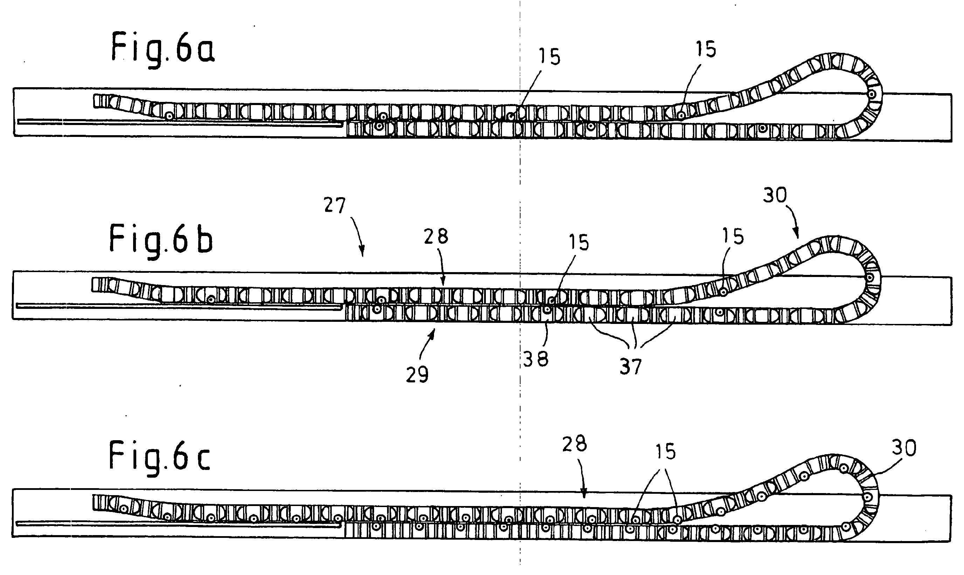

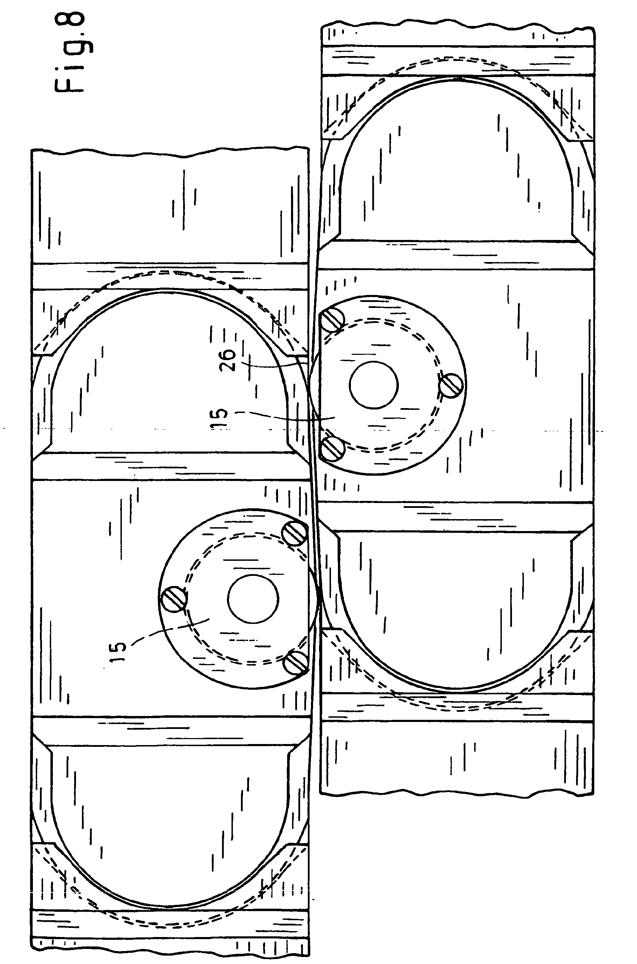

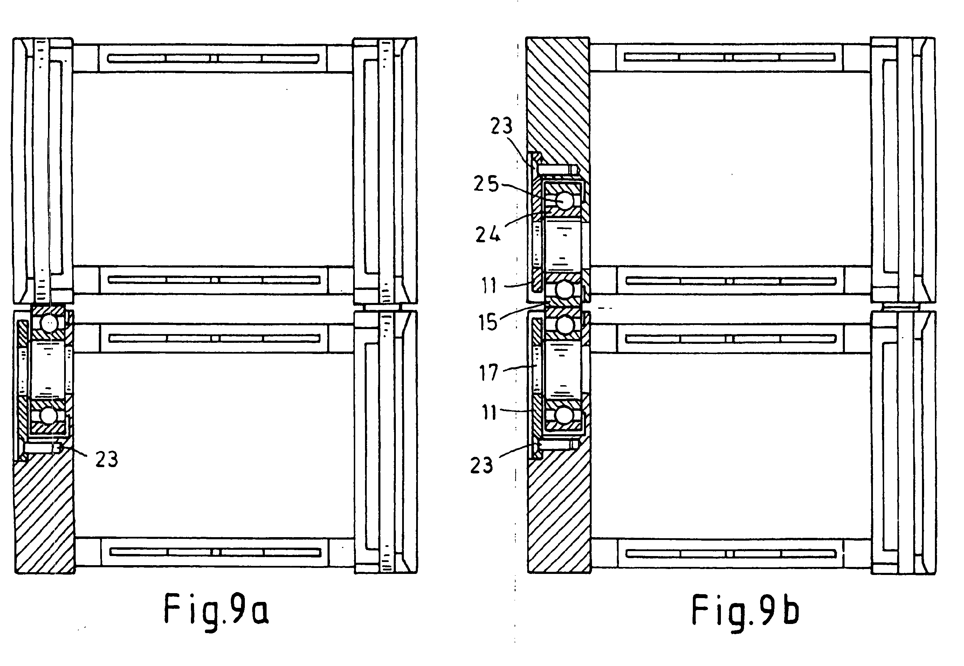

Als Laufflächen für die Gleitrollen des gegenüberliegenden Trums dienen in dem Ausführungsbeispiel die Schmalseiten 19 der Kettenlaschen (siehe Figur 9), die sich im wesentlichen zwischen den durch die Gelenkbereiche definierten Verschwenkachsen benachbarter Kettenglieder erstrecken (Figuren 6-8). Hierdurch ist gewährleistet, dass im gestreckten Zustand der Energieführungskette die Laufflächenbereiche 26 zwischen den benachbarten Kettenlaschen auf Höhe der Gelenkverbindungen keine Vertiefungen entstehen, so dass sich eine über die Kettenlänge durchgehende Lauffläche ohne oder nur mit geringen Niveauunterschieden für die Gleitrollen ergibt.

Die Lauffläche bzw. Seitenfläche 19 weist sich in Längsrichtung der Energieführungskette erstreckende, der Gleitrolle 15 vor- bzw. nachgelagerte Auflaufschrägen 20 auf, die zu den Gleitrollen 15 hin ansteigen und im wesentlichen jeweils auf Höhe der Verschwenkachsen der Laschen beginnen. Die Steigung der Auflaufschrägen 20 ist dabei vergleichsweise gering und kann z.B. ein Höhe von ca. 3 mm über eine Länge von 80 mm überwinden.Über den Scheitelpunkt der Auflaufschräge 20 ragt dabei der Bereich 18 der Gleitrolle 15 nochmals um ca. 2 mm hervor.

Die Innenlaschen sowie die nicht mit Gleitrollen versehenen Schmalseiten der Außenlaschen weisen in den gezeigten Ausführungsbeispielen keine Auflaufschrägen auf.

Der Durchmesser der Gleitrollen 15 entspricht in dem gezeigten Ausführungsbeispiel im wesentlichen der halben Höhe der Kettenlasche 1. Der Auflaufwinkel auf die Geitrollen (Winkel zwischen der Umfangsfläche der Gleitrolle und der Auflaufschräge) ist hierdurch vergleichsweise gering. Es können jedoch auch Gleitrollen mit einem deutlich verringerten Durchmesser verglichen mit der Höhe der Kettenlaschen eingesetzt werden.

Aufgrund der Verbreiterung der mittleren Bereiche 11,12 der Kettenlaschen 1,2 ist hier auch eine Verbreiterung der Lauffläche für die Gleitrollen möglich, wodurch eine geringere Flächenpressung auf die Schmalseiten 19 der Kettenlaschen und damit eine zusätzlich verringerte Materialbeanspruchung resultiert.

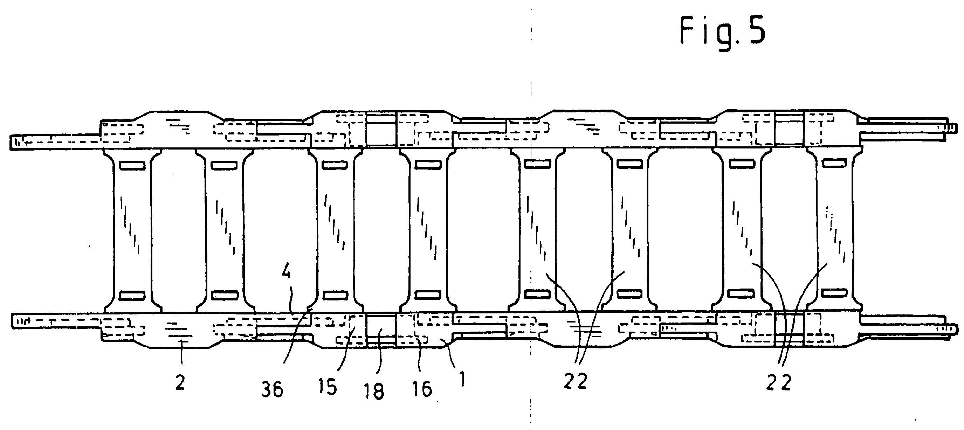

Wie sich des weiteren aus den Figuren 1, 2, 3 und 5 ergibt, sind auf Höhe der verstärkten mittleren Bereiche 11,12, in deutlichem Abstand voneinander paarweise Zapfen 21 zur Befestigung der Querstege 22 angeordnet, so dass gegenüberliegende Innen-und Außenlaschen jeweils über vier Querstege verbunden sind, wodurch die Stabilität der Kettenglieder erhöht wird. An der Außenlasche sind die Zapfen 21 dabei in Längsrichtung der Energieführungskette jeweils vor und hinter der Gleitrolle 15 angeordnet. Auch die Querstege 22 der Innenlaschen sind beabstandet zueinander angeordnet (Fig. 5). Ist die gegenüberliegende Seite der Kettenlasche 1, wie dargestellt, nicht mit einer Gleitrolle versehen, so können auf dieser Seite die Kettenlaschen wahlweise auch durch einen einzigen, auf Höhe der Gleitrolle angeordneten Quersteg verbunden sein.

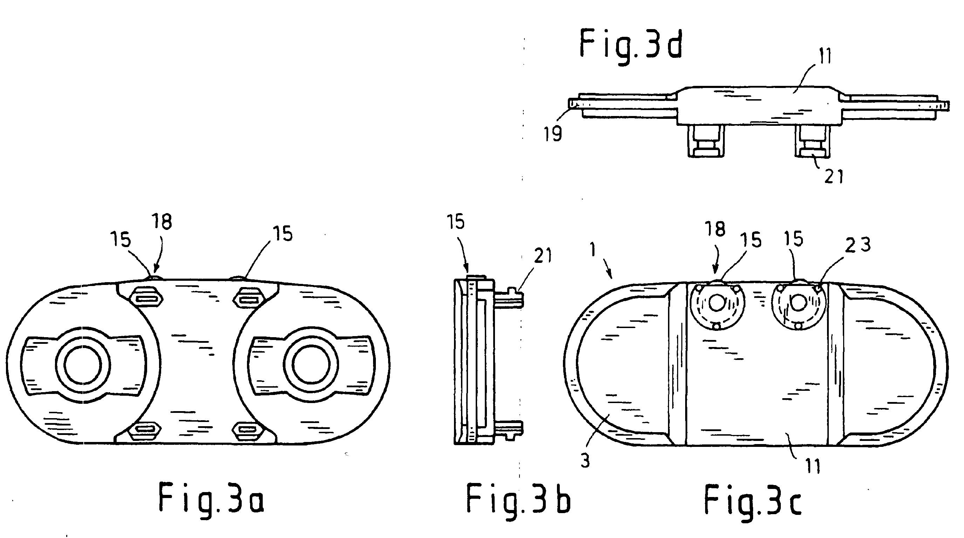

Gemäß dem Ausführungsbeispiel nach Figur 3 können an einer Kettenlasche auch zwei (oder ggf. auch mehr) Gleitrollen hintereinander angeordnet sein. Die Gleitrollen sind auch hier im Dickstellenbereich mittels Flanschen befestigt. Die Querstege 22 sind wie bei den Kettenlaschen nach Fig. 1 und 2 an den Endbereichen der Dickstellenbereiche angeordnet, sie können ggf. auch zwischen den Gleitrollen vorgesehen sein. Der Laufflächenbereich zwischen den Gleitrollen 15 verläuft parallel zu der gegenüberliegenden Schmalseite der Lasche.

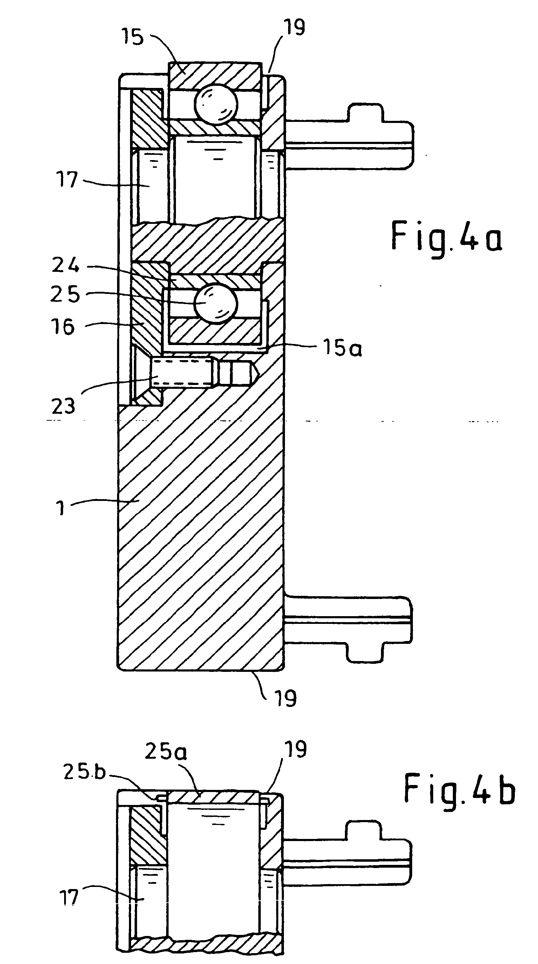

Wie aus den Figuren 4 und 9 hervorgeht, rollen die Gleitrollen 15 auf den Schmalseiten 19 der Kettenlaschen 1 des gegenüberliegenden Trums ab, bis diese mit den Gleitrollen des gegenüberliegenden Trums in Kontakt kommen und diese überrollen.

Des weiteren geht aus den Figuren 4 und 9 hervor, dass die Drehachse 17 der Gleitrolle jeweils an einem Ende von dem Flansch 16 und an dem gegenüberliegnen Ende von der Kettenlasche in einer Ausnehmung 15a gehaltert ist. Die Drehachse trägt eine Lagerschale 24 eines Kugellagers 25. Die Flansche 16 sind mittels drei Schraubbolzen 23 an den Kettenlaschen unverdrehbar festgelegt und vollständig von der Lasche 1 aufgenommen, so dass die Flansche seitlich nicht hervorstehen. Dabei nehmen die Gleitrollen 15 ca. die halbe Breite der Kettenlaschen ein. Die Flansche 11 können dabei auch so ausgeführt sein, dass diese die Gleitrollen 12 im wesentlichen einkapseln.

Durch die Befestigung der Gleitrollen 15 mittels der Flansche 11 unmittelbar an den Kettenlaschen ergibt sich eine besonders stabile Lagerung der Gleitrollen. Die Gleitrollen sind in der Querschnittskontur der Energieführungskette und die Drehachsen innerhalb der Querschnittskontur der Kettenlaschen angeordnet, so dass nach außen vorstehende Bereiche vermieden werden.

Dadurch, dass die Höhe der über die Schmalseiten 14 der Kettenlaschen 1 hervorstehenden Bereiche 13 verglichen mit dem Durchmesser der Gleitrollen 12 eine geringe Höhe aufweisen, ist eine Verfahrung der Energieführungskette mit großer Laufruhe möglich.

Wie in Figur 4, unten, gezeigt, kann bei demontierter Gleitrolle die der jeweiligen Schmalseite 19 des Kettengliedes zugewandte Öffnung mit einer Abdeckkappe 25a verdeckt werden und zu deren Festlegung an der Seitenlasche Rastmittel 25b vorgesehen sein können, wobei gegebenenfalls das Befestigungsmittel für die Gleitrolle montiert bleiben kann. Gegebenenfalls kann durch dieselbe oder eine separate Abdeckkappe auch der seitliche Bereich des Seitenteils, der der Aufnahme des Befestigungsmittel der Gleitrolle dient, verdeckt werden. Die Abdeckung kann dabei bündig mit der jeweiligen Begrenzungsfläche der Seitenlasche abschließen.

Wie aus Figur 5 hervorgeht sind an Innen- und Außenlaschen jeweils zwei Querstege 22 unmittelbar benachbart zu den Endbereichen 3,4 angeordnet. Die Querstege 22 an den Außenlaschen 1 übergreifen mit ihren endseitigen Verbreiterungen 36 die Endbereiche 4 der Innenlaschen innenseitig mit nur geringem Spiel, so dass durch diese Überdeckung die Stabilität der Kette erhöht wird.

Um das Obertrum auf dem Untertrum mittels der Gleitrollen 15 mit geringem Kraftaufwand verfahren zu können, ist es, wie aus Figur 6 hervorgeht, nicht erforderlich, an jeder Kettenlasche der Energieführungskette 27 Gleitrollen vorzusehen, diese können vielmehr auch im Abstand voneinander, z.B. nach jedem dritten oder vierten Kettenglied) an den Kettenlaschen angeordnet sein. Sind die Gleitrollen in geringem Abstand angeordnet, z.B. an jedem Kettenglied, so kommen auch beim Übergang vom-Umlenk-bereich 30 zum Obertrum 28 die Gleitrollen zuerst mit dem Untertrum 29 in Kontakt und eine Gleitreibung wird vermieden.

In derselben Energieführungskette 27 können Kettenglieder mit Rollen 38 vorgesehen sein, die eine größere Länge aufweisen, als Kettenglieder ohne Rollen 37 (Fig. 6).

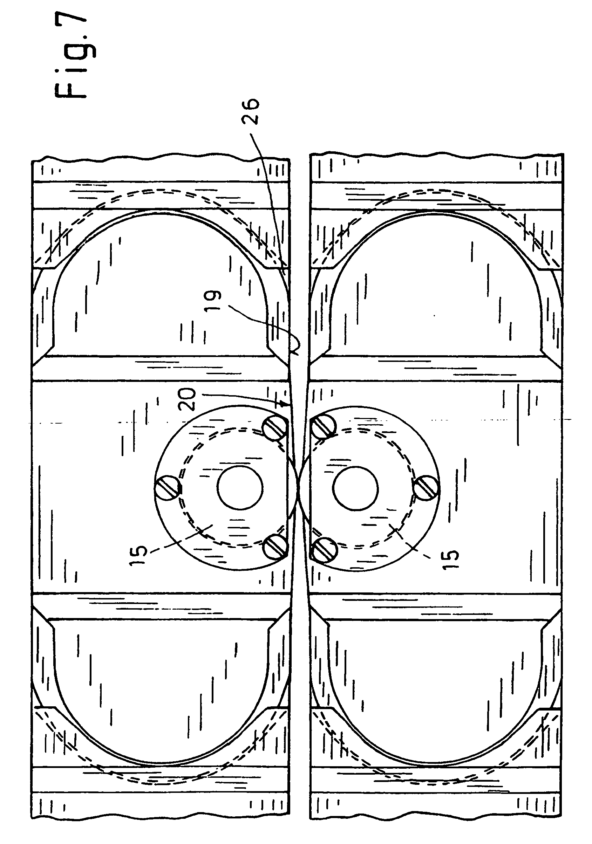

Wie aus den Figuren 6-8 hervorgeht, ist aufgrund der geringfügig vorstehenden Gleitrollen bei ausreichender Stabilität der Energieführungskette das abgelegte Obertrum freitragend angeordnet und stützt sich nur mittels der Gleitrollen auf dem Untertrum ab, so dass bei einer Relativbewegung von Ober- und Untertrum besonders geringe Reibungswerte resultieren. Aufgrund der Auflaufschrägen 20 (Fig. 7) erweitert sich der Zwischenraum zwischen der Kettensträngen.

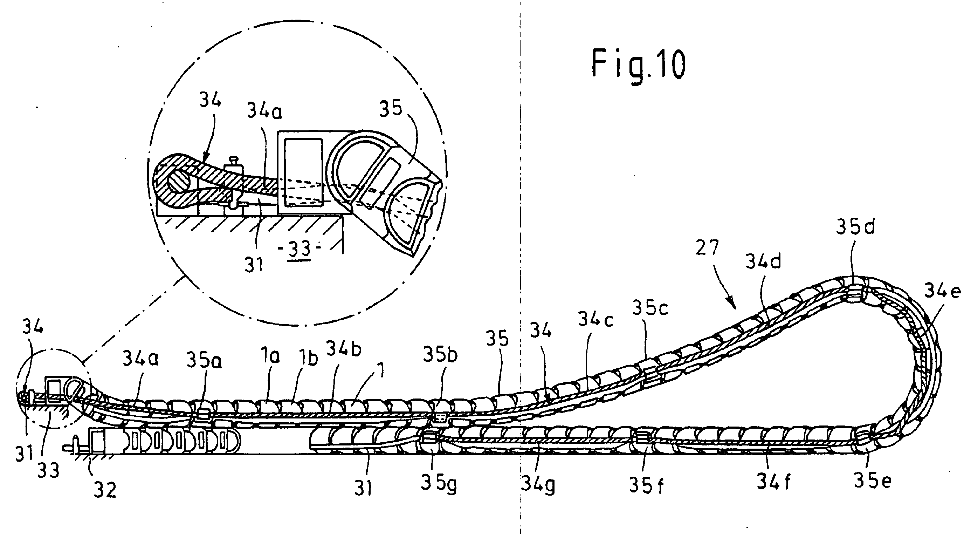

Als weitere Einrichtung, die im Zusammenhang mit den Gleitrollen von besonderer Bedeutung ist, kann die Energieführungskette mit einem in Längsrichtung der Kette nicht dehnbaren und in Abwinklungsrichtung der Kette biegsamem Stahlseil ausgestattet sein, wie diese Figur 10 zu entnehmen ist.

Die Darstellung in Fig. 10 zeigt eine Energieführungskette 27 zur Aufnahme und Führung von Leitungen 31 zwischen einer festen Basis 32 und einem beweglichen Mitnehmer 33 mit zwei parallelen Laschensträngen aus in Querrichtung gegenüberliegenden Laschen 1, die durch (in Fig. 10 nicht dargestellte) Querstege miteinander verbunden sind. Die unmittelbar benachbarten Laschen 1a und 1b jedes Laschenstrangs sind in der Abwinklungsrichtung der Kette gegeneinander verschwenkbar.

Wie weiterhin aus Figur 10 hervorgeht, sind in einem Bereich der Kette, der sich vom Mitnehmer 33 über das Obertrum, den Abwinklungsbereich bis in das Untertrum der Kette erstreckt, nicht dehnbare und in Abwinklungsrichtung der Kette biegsame Elemente 34 (im einzelnen 34a, 34b, 34c, 34d, 34e, 34f und 34g) angeordnet. Diese Elemente verbinden Kettenglieder 35a, 35b, 35c, 35d, 35e, 35f und 35g untereinander, die abschnittsweise im Abstand mehrerer Kettenglieder voneinander und vom Mitnehmer 33 in dem betreffenden Bereich der Kette angeordnet sind. Das zum Mitnehmer 33 nächstliegende Kettenglied 35a ist durch das nicht dehnbare Element 34a mit dem Mitnehmer 33 verbunden.

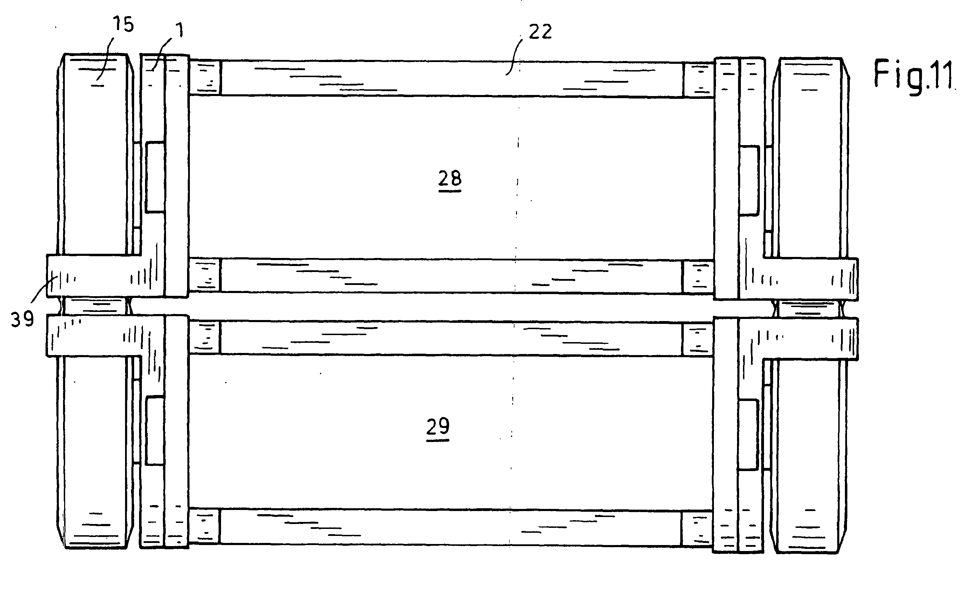

In Figur 11 ist ein zweites Ausführungsbeispiel der erfindungsgemäßen Energieführungskette dargestellt. Dort sind die Gleitrollen 15 auf die Außenseiten der Kettenlaschen 1, 2 aufgesetzt. Die Gleitrollen 15 sind nicht verdeckt. Als Laufflächen dienen seitlich sowohl an den Außenlaschen 1 als auch an den Innenlaschen 2 ausgebildete, im Querschnitt L-förmige Verbreiterungen 39, die an den mit Gleitrollen 15 versehenen Kettengliedern 38 fensterartige Ausnehmungen aufweisen, die jeweils von der Gleitrolle 15 durchsetzt werden. Die Anordnung der Gleitrollen 15 auf den Außenseiten der Kettenlaschen 1, 2 außerhalb des Kettenquerschnitts hat den Vorzug, dass die Teilung der Kettenglieder 38 mit Rollen kleiner gewählt werden kann, d. h. genauso klein wie die Teilung der Kettenglieder 37 ohne Rollen.

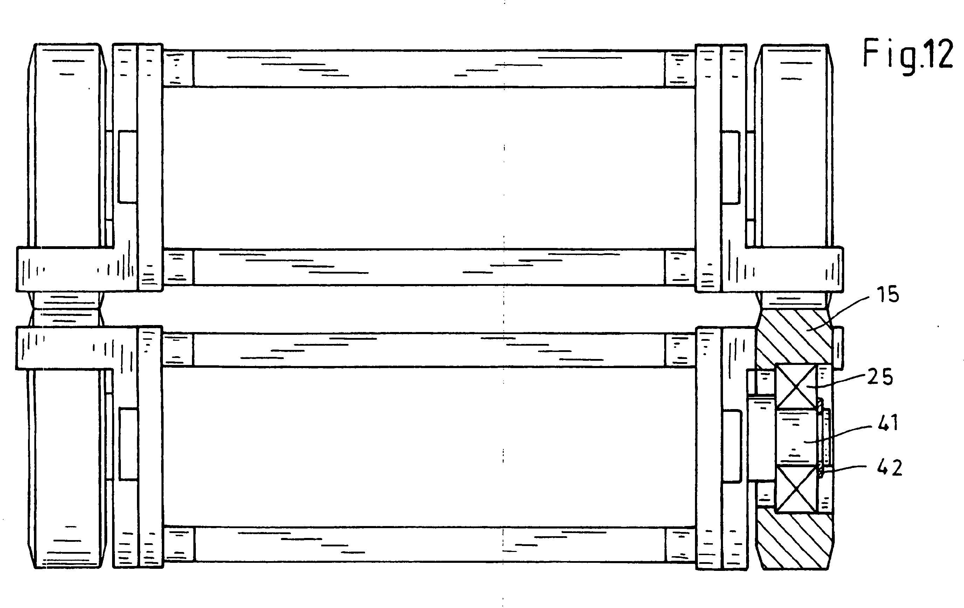

Wie dies insbesondere aus Figur 12 in der Schnittdarstellung ersichtlich ist, werden die Gleitrollen 15 dort von nur andeutungsweise dargestellten Kugellagern 25 aufgenommen, die jeweils auf einem an der Außenseite der betreffenden Kettenlasche 1 angeformten Lagerzapfen 41 mittels eines Seegerrings 42 gesichert sind.

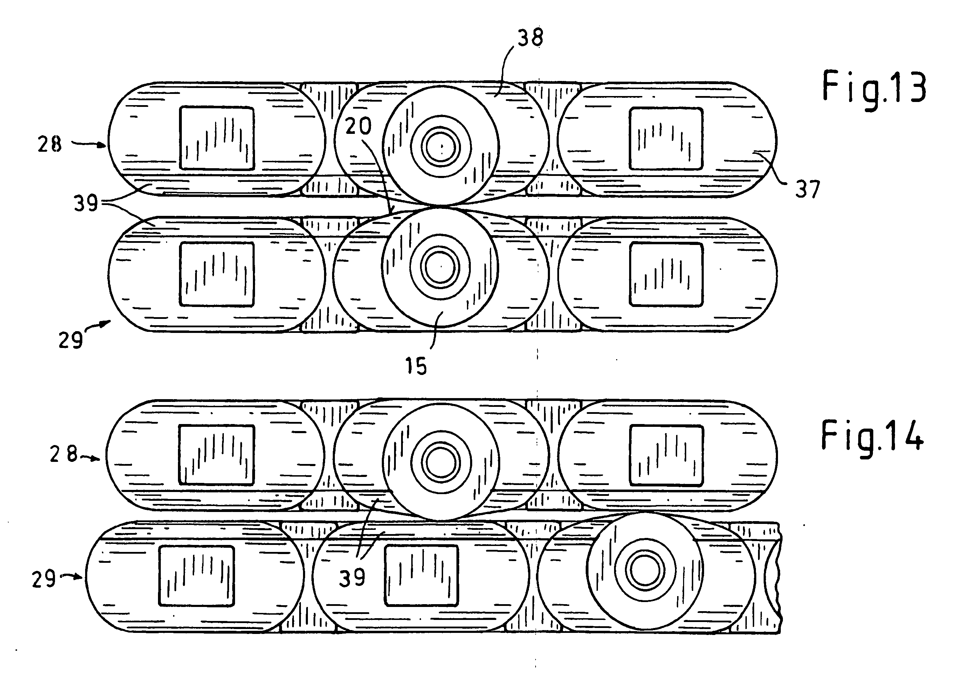

Die im Querschnitt L-förmigen Verbreiterungen 39, die sowohl an den Außenlaschen 1 als auch an den Innenlaschen 2 beider Laschenstränge vorgesehen sind, bilden in Längsrichtung jeweils eine geschlossene Lauffläche für die Gleitrollen 15, wobei bei dieser Ausführungsform ebenfalls zu den Gleitrollen 15 hin jeweils ansteigende Auflaufschrägen vorgesehen sein können, wie dies aus den Figuren 13 und 14 ersichtlich ist.

In den Figuren 13 und 14 sind zwei verschiedene Verfahrstellungen der Energieführungskette dargestellt, d. h. zwei unterschiedliche Stellungen jeweils der Kettenglieder 38 mit Rollen zueinander. In Figur 14 sind die Kettenglieder 38 mit Rollen seitlich versetzt zueinander dargestellt. Treffen die Gleitrollen 15 des Obertrums 28 und des Untertrums 29 aufeinander, wie dies in Figur 13 dargestellt ist, so muß sich das Obertrum 28 bezüglich des Untertrums 29 anheben, da die im Obertrum 28 dargestellte Gleitrolle 15 über die Auflaufschräge 20 und die Gleitrolle 15 im Untertrum 29 sozusagen hinwegklettern muß.

Durch die Auflaufschrägen 20 wird der Überstand der Laufrollen 15 über die Laufflächen der Verbreiterungen 39 minimiert, so dass sich die Laufrollen 15 nicht ruckartig überspringen, was zu Laufunruhen der Energieführungskette führen würde.

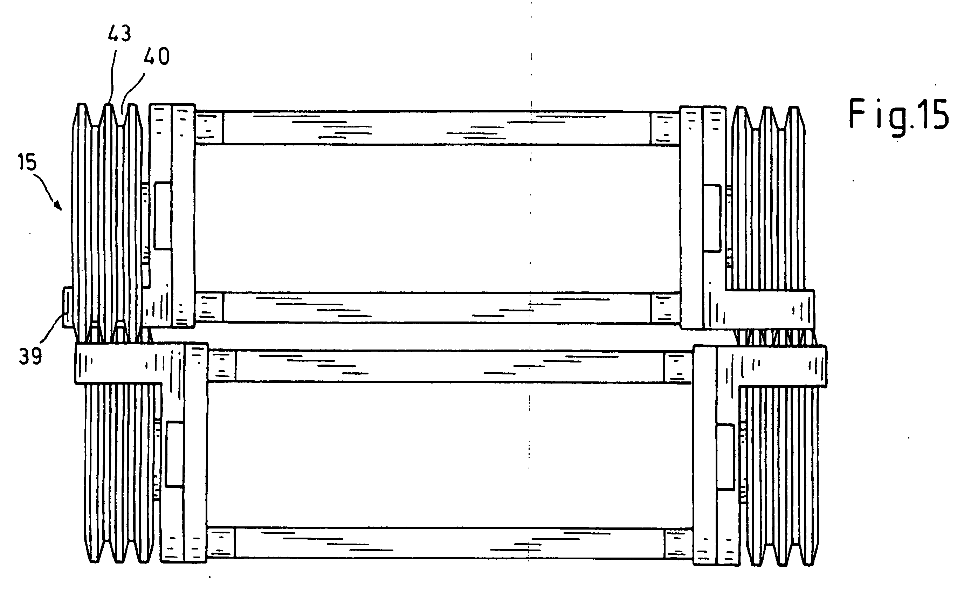

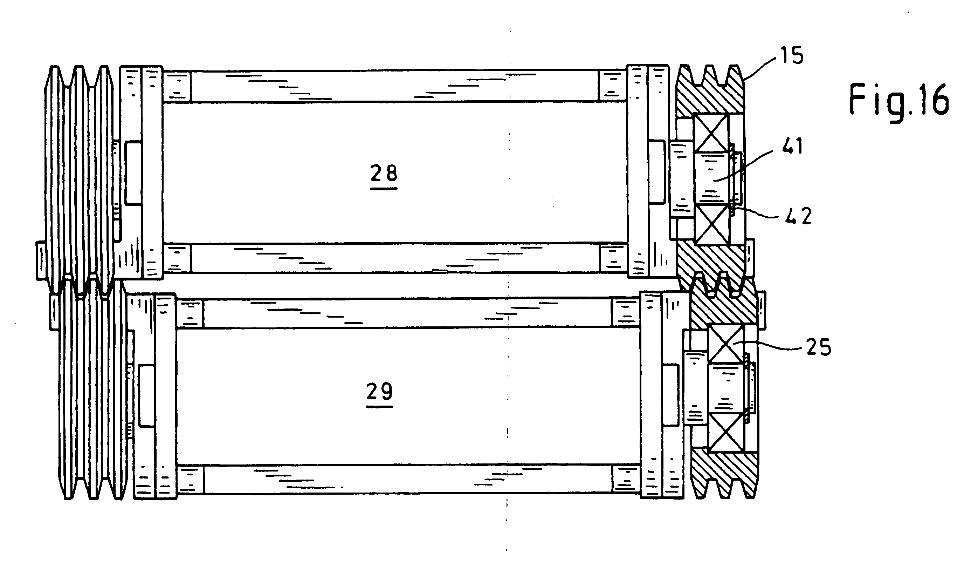

Die Figuren 15 bis 18 zeigen ein besonders vorteilhaftes drittes Ausführungsbeispiel der erfindungsgemäßen Energieführungskette, bei welchem die Gleitrollen 15 mit einem Führungsprofil versehen sind, d. h. jeweils mehrere umlaufende, im Abstand voneinander angeordnete Führungsrillen 40 mit einem trapezförmigen Querschnittsprofil aufweisen. Die zwischen den Führungsrillen 40 verbleibenden Kämme 43 zweier aufeinandertreffender Gleitrollen treffen sich frontal, was auch aufgrund des trapezförmigen Querschnitts der Führungsrillen ein seitliches Versetzen von Obertrum 28 und Untertrum 29 zur Folge hat, wie dies in Figur 15 dargestellt ist. Der Versatz entspricht in etwa der Breite einer Führungsrille 40, so dass sich die Gleitrollen des Obertrums 28 und des Untertrums 29 durchdringen. Hierzu muß die Tiefe der Führungsrillen 40 selbstverständlich größer oder gleich den Abstand der Gleitrollen 15 von den durch die Verbreiterungen 39 gebildeten Laufflächen sein.

Die Elastizität der Energieführungskette erlaubt ohne weiteres einen solchen Versatz vom Obertrum 28 zum Untertrum 29 über eine größere Länge, so dass auf diese Art und Weise minimalste Reibungswiderstände gewährleistet sind.

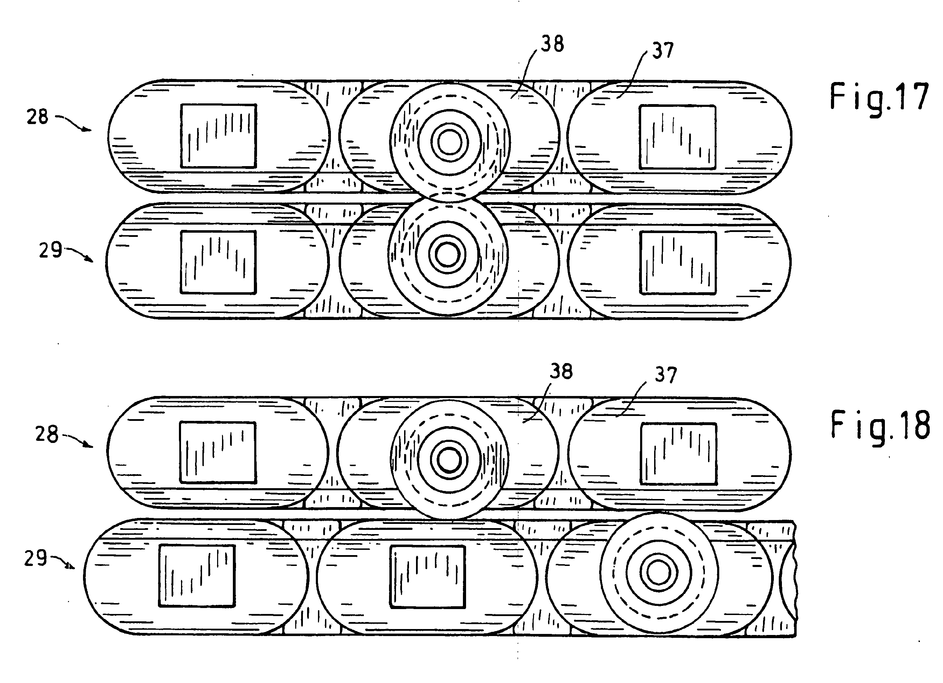

Wie dies insbesondere aus Figur 17 ersichtlich ist, durchdringen sich die Gleitrollen der Kettenglieder des Obertrums 28 und der Kettenglieder des Untertrums 29, wenn diese aufeinandertreffen.

Sowohl die Kettenlaschen als auch die Gleitrollen bestehen vorzugsweise aus Kunststoff. Es sind jedoch auch andere Materialkombinationen möglich, so können die Kettenlaschen und/ oder die Gleitrollen auch aus metallischen Werkstoffen bestehen.

### Bezugszeichenliste

- 1: Außenlasche
- 2: Innenlasche
- 3, 4: Endbereich
- 5: Gelenkzapfen
- 6, 7: Endbereich
- 8: Zapfenführung
- 9, 10: Anschlagpaare
- 11, 12: mittlerer Bereich
- 13, 14: Schrägen
- 15: Gleitrolle
- 15a: Ausnehmung
- 16: Flansch
- 17: Drehachse
- 18: Bereich
- 19: Schmalseite
- 20: Auflaufschräge
- 21: Zapfen
- 22: Quersteg
- 23: Schraubbolzen
- 24: Lagerschale
- 25: Kugellager
- 25a: Abdeckkappe
- 25b: Rastmittel
- 26: Laufflächenbereich
- 27: Energieführungskette
- 28: Obertrum
- 29: Untertrum
- 30: Umlenkbereich
- 31: Leitungen
- 32: Basis
- 33: Mitnehmer
- 34: nicht dehnbares Elemente
- 35: Kettenglied
- 36: Verbreiterung
- 37: Kettenglied ohne Rollen
- 38: Kettenglied mit Rollen
- 39: Verbreiterungen der Kettenlaschen
- 40: Führungsrillen
- 41: Lagerzapfen
- 42: Seegerring
- 43: Kämme

## Patentansprüche

1. Energieführungskette zur Führung von Schläuchen, Kabeln, oder dergleichen mit einer Anzahl gelenkig miteinander verbundener Kettenglieder (35), die durch zueinander parallele Kettenlaschen (1,2) und diese verbindende Querstege (22) gebildet werden, wobei die Energieführungskette so verfahrbar ist, dass diese ein Obertrum (28), ein Untertrum (29) und einen diese verbindenden Umlenkbereich (30) bildet, **dadurch gekennzeichnet, dass** im Bereich einer Schmalseite (19) einer Kettenlasche zwei voneinander in Längsrichtung der Kette beabstandete Querstege (22) vorgesehen sind.

2. Energieführungskette nach Anspruch 1, **dadurch gekennzeichnet, dass** im Bereich einer Schmalseite einer Lasche (1,2) eines Kettenglieds zwei Querstege (22) jeweils unmittelbar benachbart den beiden Gelenkbereichen (6, 7) der Kettenlasche (1, 2) vorgesehen sind.

3. Energieführungskette nach Anspruch 1 oder 2, **dadurch gekennzeichnet, dass** an den Querstegen (22) seitliche Verbreiterungen (36) vorgesehen sind, die die Innenseite der benachbarten Lasche teilweise überdecken.

4. Energieführungskette nach einem der Ansprüche 1 bis 3, **dadurch gekennzeichnet, dass** zumindest an einigen Kettengliedern des Obertrums (28) und/oder des Untertrums (29) Gleitrollen (15) vorgesehen sind, die derart angeordnet sind, dass sie auf an den Kettengliedern der gegenüberliegenden Trums vorgesehenen Laufflächen (19) bei einer Bewegung der Energieführungskette (27) abrollbar sind.

5. Energieführungskette nach Anspruch 4, **dadurch gekennzeichnet, dass** die Gleitrollen (15) ein Führungsprofil aufweisen, das durch mehrere umlaufende, im Abstand voneinander in der Lauffläche der Gleitrollen (15) angeordnete Führungsrillen (40) gebildet wird und dass die Tiefe der Führungsrillen (40) wenigstens dem Überstand der Gleitrolle (15) über die Lauffläche der betreffenden Kettenlasche (1, 2) entspricht.

6. Energieführungskette nach Anspruch 4 oder 5, **dadurch gekennzeichnet, dass** die Gleitrollen (15) in an den Kettenlaschen (1) vorgesehenen Ausnehmungen (15a) angeordnet sind und zumindest geringfügig über die Kettenlaschen (1) hervorstehen

7. Energieführungskette nach einem der Ansprüche 4 bis 6, **dadurch gekennzeichnet, dass** an je einer Kettenlasche (1) zumindest je zwei Gleitrollen (15) vorgesehen sind, die in Längsrichtung der Energieführungskette (27) voneinander beabstandet sind.

8. Energieführungskette nach einem der Ansprüche 4 bis 7, **dadurch gekennzeichnet, dass** zumindest je eine Gleitrolle (15) an einer Kettenlasche (1) vorgesehen ist, die im mittleren Bereich (11,12) der Kettenlasche (1) angeordnet ist.

9. Energieführungskette nach Anspruch 8, **dadurch** g**ekennzeichnet, dass** vor und hinter der Gleitrolle ein Quersteg vorgesehen ist.

10. Energieführungskette nach einem der Ansprüche 4 bis 9, **dadurch gekennzeichnet, dass** die Laufflächen (19) Auflaufschrägen (20) aufweisen, die zu den Gleitrollen (15) hin jeweils ansteigen.

11. Energieführungskette nach einem der Ansprüche 6 bis 10, **dadurch gekennzeichnet, dass** Kettenlaschen (19) vorgesehen sind, deren eine Schmalseite (19) mit einer Ausnehmung (15a) zur Aufnahme einer Gleitrolle (15) ausgestattet ist und dass die gegenüberliegende Schmalseite (19) durchgehend ausgebildet ist, und dass die Kettenlasche (1) so ausgebildet ist, dass sie wahlweise mit einer der beiden Schmalseiten (19), dem anderen Trum (28,29) gegenüberliegend montierbar ist.

12. Energieführungskette nach einem der Ansprüche 1 bis 11, **dadurch gekennzeichnet, dass** alle Kettenlaschen (1, 2) eines Strangs mit einer Verbreiterung (39) auf Höhe einer Schmalseite vorgesehen sind und dass die Querstege (22) auf Höhe der Verbreiterung (39) angeordnet sind.

13. Energieführungskette nach einem der Ansprüche 1 bis 12, **dadurch gekennzeichnet, dass** zur Aufnahme und Führung von Leitungen (31) zwischen einer festen Basis (32) und einem beweglichen Mitnehmer (33) mit zwei parallelen Laschensträngen aus in Querrichtung gegenüberliegenden Laschen (1), die durch Querstege (22) miteinander verbunden sind, wobei die unmittelbar benachbarten Laschen jedes Laschenstranges in der Abwinklungsrichtung der Kette gegeneinander verschwenkbar sind, wobei zumindest in einem an den Mitnehmer (33) anschließenden Bereich der Kette abschnittsweise Kettenglieder (35a, 35b, 35c, 35d, 35e, 35f, 35g) untereinander und das zum Mitnehmer (33) nächstliegende (35e) dieser Kettenglieder mit dem Mitnehmer (33) zustabil durch mindestens ein in Längsrichtung der Kette im wesentlichen nicht dehnbares und in Abwinklungsrichtung der Kette biegsames Element (34) verbunden sind.

14. Kettenglied für eine Energieführungskette nach einem der Ansprüche 1 bis 13 zur Führung von Schläuchen, Kabeln oder dergleichen, wobei das Kettenglied durch zueinander parallele Kettenlaschen (1,2) und diese verbindende Querstege (22) gebildet wird, wobei das Kettenglied gelenkig mit anderen Kettengliedern zu einer Energieführungskette verbindbar ist, die so verfahrbar ist, dass diese ein Obertrum (28), ein Untertrum (29) und einen diese verbindenden Umlenkbereich (30) bildet, **dadurch gekennzeichnet , dass** im Bereich einer Schmalseite (19) einer Kettenlasche zwei voneinander in Längsrichtung der Kette beabstandete Querstege (22) vorgesehen sind.

15. Kettenglied nach Anspruch 14, **dadurch gekennzeichnet , dass** im Bereich einer Schmalseite einer Lasche (1,2) eines Kettengliedes zwei Querstege (22) jeweils unmittelbar benachbart den beiden Gelenkbereichen (6,7) der Kettenlasche (1,2) vorgesehen sind.

16. Kettenglied nach Anspruch 14 oder 15, **dadurch ge** - **kennzeichnet , dass** an den Querstegen (22) seitliche Verbreiterungen (36) vorgesehen sind, die die Innenseite der benachbarten Lasche teilweise überdecken.

## Claims

1. Energy guiding chain for guiding cables, hoses and the like, having a number of chain links (35) connected to one another in articulated fashion which are formed by parallel straps (1, 2) connected by cross-members (22), where the energy guiding chain can be moved in such a way that it forms an upper strand (28), a lower strand (29) and a deflection zone (30) connecting the two, **characterized in that** in the area of one narrow side (19) of a chain strap two cross-members (22) are provided at a distance from one another in the longitudinal direction of the chain.

2. Energy guiding chain as per Claim 1, **characterized in that** in the area of one narrow side of a strap (1, 2) of a chain link two cross-members (22) are provided each directly adjacent of the joint sections (6, 7) of the chain strap (1, 2).

3. Energy guiding chain as per Claim 1 or 2, **characterized in that** the cross-members (22) are provided with lateral wider sections (36) which are partially covering the inner side of the adjacent strap.

4. Energy guiding chain as per one of the Claims 1 to 3, **characterized in that** at least some of the chain links of the upper strand (28) and/or the lower strand (29) are provided with rollers (15) which are arranged in such a way that, when the energy guiding chain (27) travels, they can roll in running surfaces (19) provided on the chain links of the opposite strand.

5. Energy guiding chain as per Claim 4, **characterized in that** the rollers (15) have a guide profile, which is formed by several all-round guide grooves (40) positioned at a distance from one another in the running surface of the rollers (15) and that the depth of the guide grooves (40) is at least equal to the distance the roller (15) projects beyond the running surface of the associated chain strap (1, 2).

6. Energy guiding chain as per Claim 4 or 5, **characterized in that** the rollers (15) are located in recesses (15a) provided on the chain straps (1) and project at least slightly beyond the chain straps (1).

7. Energy guiding chain as per one of the Claims 4 to 6, **characterized in that** at least two rollers (15) are provided on each chain strap (1) which are spaced apart from one another in the longitudinal direction of the energy guiding chain (27).

8. Energy guiding chain as per one of the Claims 4 to 7, **characterized in that** at least one roller (15) is mounted on each chain strap (1) in the middle section (11, 12) of the chain strap (1).

9. Energy guiding chain as per Claim 8, **characterized in that** before and behind the roller one cross-member is provided.

10. Energy guiding chain as per one of the Claims 4 to 9, **characterized in that** the running surfaces (19) have run-up bevels (20) rising towards the rollers (15).

11. Energy guiding chain as per one of the Claims 6 to 10, **characterized in that** chain straps (19) are provided which have a recess (15a) for accommodating a roller (15) on one of the narrow sides (19), **in that** the opposite narrow side (19) is of continuous design, and **in that** the chain strap (1) is designed in such a way that it can optionally be mounted with one of the two narrow sides (19) facing the opposite strand (28, 29).

12. Energy guiding chain as per one of the Claims 1 to 11, **characterized in that** all the chain straps (1, 2) of one strand are provided with a wider section (39) at the level of one narrow side and that the cross-members (22) are provided at the level of the wider section (39).

13. Energy guiding chain as per one of the Claims 1 to 12, **characterized in that** for accommodating and guiding lines (31) between a stationary base (32) and a mobile driver (33) two parallel strap strands consisting of opposing straps (1) in the transverse direction are provided which are connected to one another by cross-members (22), the immediately adjacent straps of each strap strand can swivel relative to one another in the bending direction of the chain, where in at least one area of the chain adjacent to the driver (33), sections of chain links (35a, 35b, 35c, 35d, 35e, 35f, 35g) are interconnected and the chain link (35e) closest to the driver (33) is connected to the driver (33) in tension-resistant fashion by at least one element (34) which is essentially inextensible in the longitudinal direction of the chain and flexible in the bending direction of the chain.

14. Chain link for an energy guiding chain as per one of the Claims 1 to 13 for guiding cables, hoses and the like, the chain link being formed by parallel straps (1, 2) connected by cross-members (22), where the chain link can be connected with other chain links to form an energy guiding chain, which can be moved in such a way that it forms an upper strand (28), a lower strand (29) and a deflection zone (30) connecting the two, **characterized in that** two cross-members (22) at a distance from one another in the longitudinal direction of the chain are provided in the area of one narrow side (19) of a chain strap.

15. Chain link as per Claim 14, **characterized in that** two cross-members (22) are provided in the area of one narrow side of a strap (1, 2) of a chain link each directly adjacent of the joint sections (6, 7) of the chain strap (1, 2).

16. Chain link as per Claim 14 or 15, **characterized in that** the cross-members (22) are provided with lateral wider sections (36) which are partially covering the inner side of the adjacent strap.

## Revendications

1. Chaîne d'acheminement d'énergie, pour le guidage de conduites, câbles ou éléments similaires, comprenant un certain nombre de maillons de chaîne (35) reliés mutuellement de manière articulée, qui sont formés par des joues latérales de chaîne (1, 2) et des traverses (22) les reliant, la chaîne d'acheminement d'énergie pouvant être déplacée de manière à ce qu'elle forme un brin supérieur (28), un brin inférieur (29) et une zone de renvoi (30) reliant ces brins, **caractérisée en ce que** dans la zone d'un côté étroit (19) d'une joue latérale de chaîne sont prévues deux traverses (22) espacées l'une de l'autre dans la direction longitudinale de la chaîne.

2. Chaîne d'acheminement d'énergie selon la revendication 1, **caractérisée en ce que** dans la zone d'un côté étroit d'une joue latérale (1, 2) d'un maillon de chaîne, deux traverses (22) sont prévues respectivement chacune directement au voisinage des deux zones d'articulation (6, 7) de la joue latérale de chaîne (1, 2).

3. Chaîne d'acheminement d'énergie selon la revendication 1 ou 2, **caractérisée en ce que** sur les traverses (22) sont prévus des élargissements latéraux (36), qui recouvrent partiellement le côté intérieur de la joue latérale voisine.

4. Chaîne d'acheminement d'énergie selon l'une des revendications 1 à 3, **caractérisée en ce que** sur au moins quelques maillons de chaîne du brin supérieur (28) et/ou du brin inférieur (29) sont prévus des galets (15) qui sont agencés de façon à pouvoir rouler sur des surfaces de marche (19) prévues sur les maillons de chaîne du brin opposé, lors d'un mouvement de la chaîne d'acheminement d'énergie (27).

5. Chaîne d'acheminement d'énergie selon la revendication 4, **caractérisée en ce que** les galets (15) présentent un profil de guidage, qui est formé par plusieurs rainures de guidage (40) périphériques, agencées de manière espacée les unes des autres dans la surface de marche des galets (15), et **en ce que** la profondeur des rainures de guidage (40) correspond au moins à la valeur du dépassement du galet (15) au-dessus de la surface de marche de la joue latérale de chaîne (1, 2) considérée.

6. Chaîne d'acheminement d'énergie selon la revendication 4 ou 5, **caractérisée en ce que** les galets (15) sont agencés dans des évidements (15a) sur les joues latérales de chaîne (1), et dépassent au moins très légèrement des joues latérales de chaîne (1).

7. Chaîne d'acheminement d'énergie selon l'une des revendications 4 à 6, **caractérisée en ce que** sur une joue latérale de chaîne (1) respectivement considérée, sont prévus respectivement au moins deux galets (15) qui sont espacés l'un de l'autre dans la direction longitudinale de la chaîne d'acheminement d'énergie (27).

8. Chaîne d'acheminement d'énergie selon l'une des revendications 4 à 7, **caractérisée en ce que** sur une joue latérale de chaîne (1) est prévu au moins un galet (15), qui est agencé dans la zone centrale (11, 12) de la joue latérale de chaîne (1).

9. Chaîne d'acheminement d'énergie selon la revendication 8, **caractérisée en ce que** devant et derrière le galet est prévue une traverse.

10. Chaîne d'acheminement d'énergie selon l'une des revendications 4 à 9, **caractérisée en ce que** les surfaces de marche (19) présentent des rampes de montée (20), qui montent respectivement en direction des galets (15).

11. Chaîne d'acheminement d'énergie selon l'une des revendications 6 à 10, **caractérisée en ce que** sont prévues des joues latérales de chaîne (1) dont un côté étroit (19) est pourvu d'un évidement (15a) pour recevoir un galet (15), et dont le côté étroit (19) opposé est réalisé de manière continue, et **en ce que** la joue latérale de chaîne (1) est conçue de façon telle qu'elle puisse être montée au choix avec l'un des deux côtés étroits (19) en regard de l'autre brin (28, 29).

12. Chaîne d'acheminement d'énergie selon l'une des revendications 1 à 11, **caractérisée en ce que** toutes les joues latérales de chaîne (1, 2) d'une ligne sont prévues avec un élargissement (39) au niveau d'un côté étroit, et **en ce que** les traverses (22) sont agencées au niveau de l'élargissement (39).

13. Chaîne d'acheminement d'énergie selon l'une des revendications 1 à 12, **caractérisée en ce que** pour la réception et le guidage de conduites ou conducteurs (31) entre une base fixe (32) et un entraîneur mobile (33), elle comprend deux lignes de joues latérales parallèles constituées de joues latérales (1) mutuellement opposées dans la direction transversale et reliées par des traverses (22), les joues latérales directement voisines de chaque ligne de joues latérales pouvant pivoter les unes par rapport aux autres dans la direction de courbure de la chaîne, et au moins dans une zone de la chaine, qui se raccorde à l'entraîneur (33), des maillons de chaine (35a, 35b, 35c, 35d, 35e, 35f, 35g) sont reliés entre eux par tronçons et celui (35a) de ces maillons de chaîne le plus proche de l'entraîneur (33) est relié à l'entraîneur (33), ces liaisons étant résistantes en traction et s'effectuant par au moins un élément (34) qui ne peut sensiblement pas s'allonger dans la direction longitudinale de la chaîne, mais est flexible dans la direction de courbure de la chaîne.

14. Maillon de chaîne pour une chaîne d'acheminement d'énergie selon l'une des revendications 1 à 13, pour le guidage de conduites, câbles ou éléments similaires, le maillon de chaîne étant formé par des joues latérales de chaîne (1, 2) mutuellement parallèles et des traverses (22) les reliant, le maillon de chaîne pouvant être relié de manière articulée à d'autres maillons de chaîne pour forme une chaîne d'acheminement d'énergie, qui peut être déplacée de manière à ce qu'elle forme un brin supérieur (28), un brin inférieur (29) et une zone de renvoi (30) reliant ces brins, **caractérisé en ce que** dans la zone d'un côté étroit (19) d'une joue latérale de chaîne sont prévues deux traverses (22) espacées l'une de l'autre dans la direction longitudinale de la chaîne.

15. Maillon de chaîne selon la revendication 14, **caractérisé en ce que** dans la zone d'un côté étroit d'une joue latérale (1, 2) d'un maillon de chaîne, deux traverses (22) sont prévues respectivement chacune directement au voisinage des deux zones d'articulation (6, 7) de la joue latérale de chaîne (1, 2).

16. Maillon de chaîne selon la revendication 14 ou 15, **caractérisé en ce que** sur les traverses (22) sont prévus des élargissements latéraux (36), qui recouvrent partiellement le côté intérieur de la joue latérale voisine.
